(19) Europäisches Patentamt
European Patent Office
Office européen des brevets

(11) **EP 2 610 304 A1**

(12) **EUROPEAN PATENT APPLICATION**

(43) Date of publication:
**03.07.2013 Bulletin 2013/27**

(51) Int Cl.:
***C08L 51/04*** *(2006.01)*
***C08L 71/12*** *(2006.01)*
***C08L 85/02*** *(2006.01)*
*C08G 79/04* *(2006.01)*

(21) Application number: **12197187.3**

(22) Date of filing: **14.12.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.12.2011 KR 20110147917**

(71) Applicant: **CHEIL INDUSTRIES INC.**
**Gumi-si,**
**Gyeongsangbuk-do 730-710 (KR)**

(72) Inventors:
- **Jang, Seung Woo**
  **Uiwang-si, Gyeonggi-do (KR)**
- **Lee, Seon Ae**
  **Uiwang-si, Gyeonggi-do (KR)**
- **Ko, Chang Hong**
  **Uiwang-si, Gyeonggi-do (KR)**
- **Lee, Min Soo**
  **Uiwang-si, Gyeonggi-do (KR)**
- **Ahn, Sung Hee**
  **Uiwang-si, Gyeonggi-do (KR)**
- **Hong, Sang Hyun**
  **Uiwang-si, Gyeonggi-do (KR)**

(74) Representative: **Bublak, Wolfgang**
**Bardehle Pagenberg Partnerschaft**
**Patentanwälte, Rechtsanwälte**
**Prinzregentenplatz 7**
**81675 München (DE)**

(54) **Flame retardant thermoplastic resin composition**

(57) Disclosed herein is a flame retardant thermoplastic resin composition comprising 100 parts by weight of a base resin composed of an aromatic vinyl resin and a polyphenylene oxide resin; and 0.1 to 30 parts by weight of a polyphosphonate copolymer represented by Formula 1:

[Formula 1]

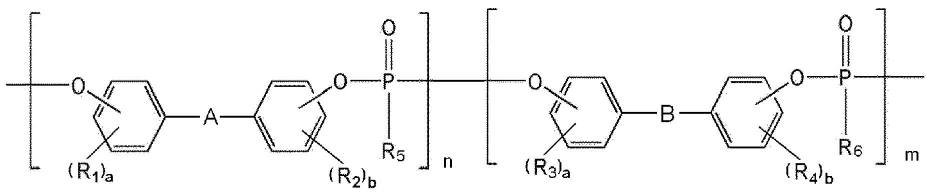

,

(wherein A and B are each independently a single bond, a $C_1$-$C_5$ alkylene group, a $C_1$-$C_5$ alkylidene group, a $C_5$-$C_6$ cycloalkylidene group, -S- or -$SO_2$-, provided that A and B are not identical to each other; $R_5$ and $R_6$ are each independently a substituted or unsubstituted $C_1$-$C_6$ alkyl group, a substituted or unsubstituted $C_6$-$C_{20}$ aryl group, or a substituted or unsubstituted $C_6$-$C_{20}$ aryloxy group; $R_1$, $R_2$, $R_3$ and $R_4$ are each independently a substituted or unsubstituted $C_1$-$C_6$ alkyl group, a substituted or unsubstituted $C_3$-$C_6$ cycloalkyl group, a substituted or unsubstituted $C_6$-$C_{12}$ aryl group, or a halogen atom; a and b are each independently an integer from 0 to 4; and n and m are each independently an integer from 1 to 500).

EP 2 610 304 A1

Fig 1.

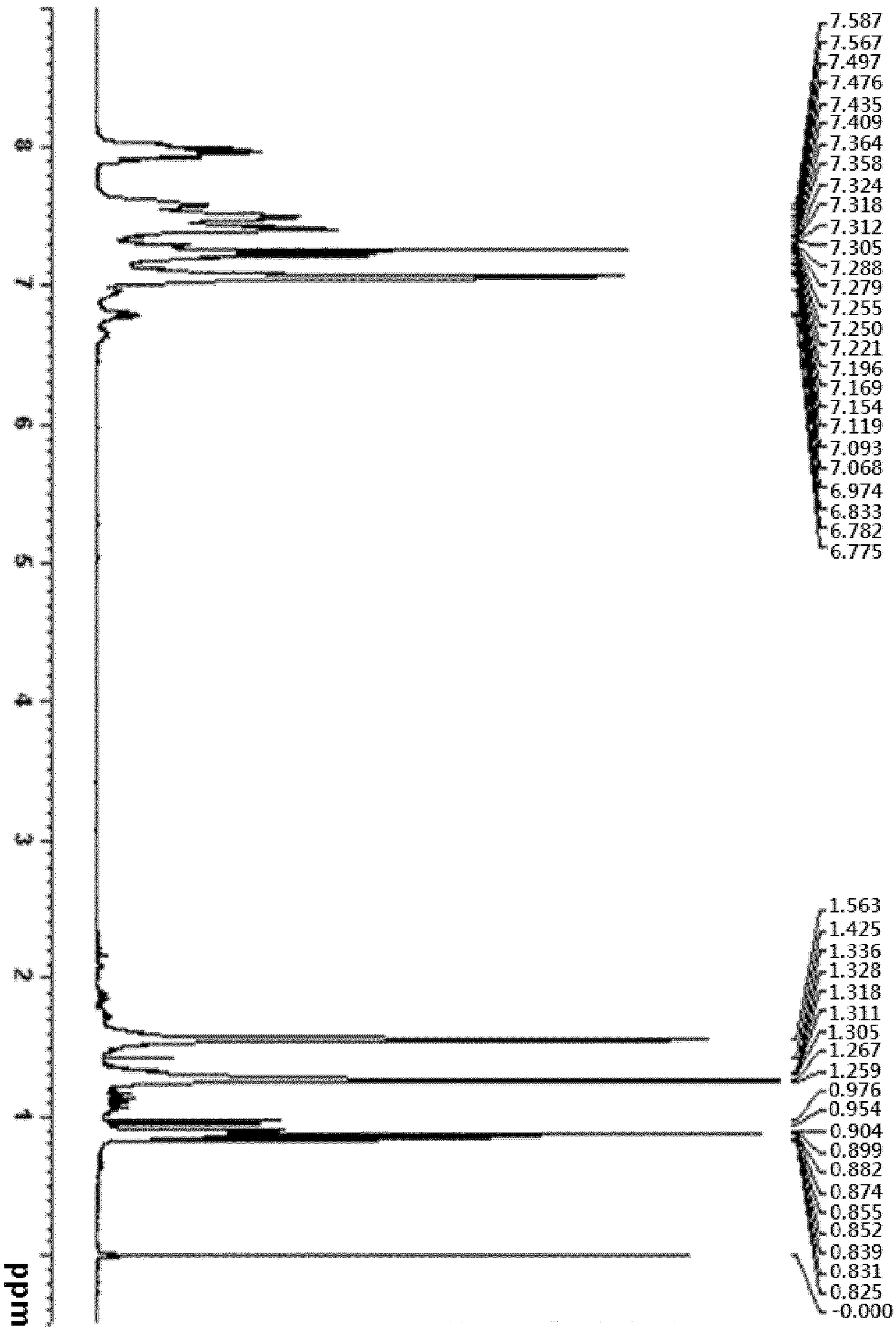
7.587
7.567
7.497
7.476
7.435
7.409
7.364
7.358
7.324
7.318
7.312
7.305
7.288
7.279
7.255
7.250
7.221
7.196
7.169
7.154
7.119
7.093
7.068
6.974
6.833
6.782
6.775
1.563
1.425
1.336
1.328
1.318
1.311
1.305
1.267
1.259
0.976
0.954
0.904
0.899
0.882
0.874
0.855
0.852
0.839
0.831
0.825
-0.000
8
7
6
5
4
3
2
1
ppm

## Description

The present invention relates to a flame retardant thermoplastic resin composition. More particularly, the present invention relates to a flame retardant thermoplastic resin composition, which is environmentally-friendly and has an excellent balance of physical properties including not only flame retardancy but also transparency, heat resistance, impact strength, appearance and the like by containing, as a flame retardant, a polymerizable phosphorus compound with a specific structure having two or more repeat units in a backbone thereof.

With increasing interest in environmental issues, regulation on existing halogen flame retardants has been reinforced in many countries. In line with this tendency, studies have been actively conducted to develop non-halogen flame retardants capable of replacing halogen flame retardants. Particularly, studies have focused on phosphorus flame retardants. Most common phosphorus flame retardants are phosphoric acid esters. For example, monomolecular phosphorus flame retardants such as triphenyl phosphate, resorcinol bisphenol phosphate and the like are usually used. However, such monomolecular phosphorus flame retardants have a low molecular weight and thus volatilize at high molding temperatures, causing deterioration in appearance of plastic products containing the same. Further, monomolecular phosphorus flame retardants may escape into the outside environment, which can cause environmental contamination. Accordingly, interest in polyphosphonates as polymerizable phosphorus flame retardants has been growing in the art. Polyphosphonates in the polymer form exhibit excellent properties in terms of flame retardancy, mechanical properties, heat resistance and transparency, as compared with monomolecular phosphorus flame retardants. In particular, polyphosphonates can be used in resins requiring high heat resistance and high transparency, such as polycarbonate resins.

However, existing polyphosphonates are not satisfactory in terms of impact strength, heat resistance and appearance, and tend to partially degrade thermoplastic resins due to structural characteristics thereof, thereby causing deterioration in physical properties. Moreover, existing polyphosphonates exhibit unsatisfactory compatibility with resins and low dispersibility.

Thus, it is the object of the present invention to overcome above disadvantages and to provide a flame retardant thermoplastic resin composition, which is environmentally-friendly without incurring gas formation or degradation issues and has an excellent balance of physical properties including not only flame retardancy but also transparency, heat resistance, impact strength, appearance and the like by containing as a flame retardant a polyphosphonate copolymer having two or more repeat units in a backbone thereof.

This object has been achieved by the provision of a flame retardant thermoplastic resin composition. The flame retardant thermoplastic resin composition includes 100 parts by weight of a base resin composed of an aromatic vinyl resin and a polyphenylene oxide resin; and 0.1 to 30 parts by weight of a polyphosphonate copolymer represented by Formula 1:

[Formula 1]

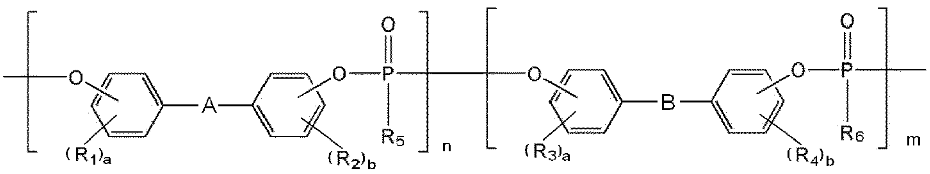

,

wherein A and B are each independently a single bond, a $C_1$-$C_5$ alkylene group, a $C_1$-$C_5$ alkylidene group, a $C_5$-$C_6$ cycloalkylidene group, -S- or $-SO_2-$, provided that A and B are not identical to each other; $R_5$ and $R_6$ are each independently a substituted or unsubstituted $C_1$-$C_6$ alkyl group, a substituted or unsubstituted $C_6$-$C_{20}$ aryl group, or a substituted or unsubstituted $C_6$-$C_{20}$ aryloxy group; $R_1$, $R_2$, $R_3$ and $R_4$ are each independently a substituted or unsubstituted $C_1$-$C_6$ alkyl group, a substituted or unsubstituted $C_3$-$C_6$ cycloalkyl group, a substituted or unsubstituted $C_6$-$C_{12}$ aryl group, or a halogen atom; a and b are each independently an integer from 0 to 4; and n and m are each independently an integer from 1 to 500.

The base resin may include 50 wt% to 99 wt% of an aromatic vinyl resin and 1 wt% to 50 wt% of a polyphenylene oxide resin.

The aromatic vinyl resin may be composed of 1 wt% to 30 wt% of a rubber polymer and 70 wt% to 99 wt% of an aromatic vinyl monomer.

The sum of n and m may range from 3 to 600.

The polyphosphonate copolymer may have a weight average molecular weight of 1,000 g/mol to 50,000 g/mol.

The polyphosphonate copolymer may have a glass transition temperature of 75°C to 90°C.

The polyphosphonate copolymer may have a rate of change in acid value of 0.005 to 6, as calculated by Equation 1:

[Equation 1]

$$\triangle AV = \frac{AVa - AVb}{AVb} \times 100,$$

wherein $\triangle AV$ represents the rate of change in acid value, AVa represents the acid value measured after 10 g of the copolymer is left at 280°C for 1 hour, and AVb represents the initial acid value of the copolymer.

The polyphosphonate copolymer may have biphenyl units in an amount of 0.5 mol% to 99.5 mol%, based on the total copolymer.

The thermoplastic resin composition may further include at least one of auxiliary flame retardants, glidants, plasticizers, heat stabilizers, anti-dripping agents, antioxidants, compatibilizers, light stabilizers, pigments, dyes, and mineral additives.

Another aspect of the present invention provides a molded article. The molded article may be molded from the flame retardant thermoplastic resin composition.

Fig. 1 is NMR data of a polyphosphonate copolymer used in examples of the present invention.

A flame retardant thermoplastic resin composition according to the present invention includes a base resin composed of an aromatic vinyl resin and a polyphenylene oxide resin, and a polyphosphonate copolymer. Hereinafter, each component of the flame retardant thermoplastic resin composition will be described in detail.

(A)Aromatic vinyl resin

The aromatic vinyl resin may be a polymer of an aromatic vinyl monomer, a copolymer of an aromatic vinyl monomer and another copolymerizable monomer, or a rubber modified aromatic vinyl resin that is a polymer of an aromatic vinyl monomer and a rubber polymer.

Examples of the aromatic vinyl monomer include styrene, $\alpha$-methylstyrene, $\beta$-methylstyrene, p-methylstyrene, para-t-butylstyrene, ethylstyrene, and the like. These monomers may be used alone or in combination thereof.

Examples of the other copolymerizable monomer include acrylonitrile, acrylic acid, methacrylic acid, maleic anhydride, N-substituted maleimide, and the like. These monomers may be used alone or in combination thereof.

Examples of the rubber polymer include diene rubbers, such as butadiene rubbers, copolymers of butadiene and styrene, poly(acrylonitrile-butadiene), and the like, and saturated rubber obtained by hydrogenating the diene rubbers, isoprene rubbers, acrylic rubbers, ethylene-propylene-diene monomer terpolymers (EPDM), and the like. Preferably, polybutadienes, copolymers of butadiene and styrene, isoprene rubbers, and alkyl acrylate rubbers are used.

When using the rubber modified aromatic vinyl resins as an aromatic vinyl resin (A), the amount of the rubber polymers ranges from 1 wt% to 30 wt%, preferably from 5 wt% to 15 wt%, based on the total weight of the aromatic vinyl resin (A) (rubber modified aromatic vinyl resins). The aromatic vinyl monomer is present in an amount from 70 wt% to 99 wt%, preferably from 85 wt% to 95 wt%, based on the total weight of the aromatic vinyl resin (A). Within this range, the resin composition can exhibit an excellent balance of physical properties of good impact strength and mechanical properties.

For a blend of the rubber modified aromatic vinyl resin and the polyphenylene oxide resin to exhibit appropriate physical properties, rubber particles have a particle size of 0.1 $\mu$m to 6.0 $\mu$m in Z-average. In order to exhibit preferred physical properties, the rubber particles have a particle size of 0.25 to 3.5 $\mu$m in Z-average.

In one embodiment, examples of the aromatic vinyl resin (A) include polystyrene (PS), high impact polystyrene (HIPS), acrylonitrile-butadiene-styrene copolymer resin (ABS), acrylonitrile-styrene copolymer resin (SAN), acrylonitrile-styrene-acrylate copolymer resin (ASA), and the like. They can be used alone or in combination thereof. Preferably, polystyrene (PS) or high impact polystyrene (HIPS) are preferred due to their good compatibility with polyphenylene ether resins.

Methods of preparing the aromatic vinyl resin (A) are well known to a person skilled in the art and the aromatic vinyl resin can be commercially obtained in the art.

For example, the aromatic vinyl resin (A) may be polymerized by heat polymerization in the presence of or in the absence of a polymerization initiator. The polymerization initiator may be at least one selected from peroxide initiators, such as benzoyl peroxide, t-butyl hydroperoxide, acetyl peroxide, cumene hydroperoxide and the like; and azo intiators such as azobis isobutyronitrile, without being limited thereto.

The aromatic vinyl resin (A) may be prepared by mass polymerization, suspension polymerization, emulsion

polymerization, or a mixed method thereof. Among these polymerization methods, mass polymerization is preferred.

The aromatic vinyl resin (A) constitutes the base resin of the resin composition of the present invention. The aromatic vinyl resin (A) is present in an amount from 50 wt% to 99 wt%, preferably from 55 wt% to 80 wt%, more preferably from 55 wt% to 75 wt%, based on the weight of the base resin composed of (A) + (B).

(B) Polyphenylene ether resin

Examples of the polyphenylene ether resin (B) include poly(2,6-dimethyl-1,4-phenylene)ether, poly(2,6-diethyl-1,4-phenylene)ether, poly(2,6-dipropyl-1,4-phenylene)ether, poly(2-methyl-6-ethyl-1,4-phenylene)ether, poly(2-methyl-6-propyl-1,4-phenylene)ether, poly(2-ethyl-6-propyl-1,4-phenylene)ether, poly(2,6-diphenyl-1,4-phenylene)ether, a copolymer of poly(2,6-dimethyl-1,4-phenylene)ether and poly(2,3,6-trimethyl-1,4-phenylene)ether, a copolymer of poly (2,6-dimethyl-1,4-phenylene)ether and poly(2,3,6-triethyl-1,4-phenylene)ether, and the like. Among these, poly(2,6-dimethyl-1,4-phenylene)ether, or a copolymer of poly(2,6-dimethyl-1,4-phenylene)ether and poly(2,3,6-trimethyl-1,4-phenylene)ether are preferably used. Most preferably, poly(2,6-dimethyl-1,4-phenylene)ether is used.

The degree of polymerization of the polyphenylene ether resin (B) used in the preparation of the resin composition of the present invention is not particularly limited. However, the polyphenylene ether resin having an intrinsic viscosity ranging from 0.2 dl/g to 0.8 dl/g, as measured in chloroform at 25°C, is preferably used when taking into consideration heat stability or workability of the resin composition.

The polyphenylene ether resin (B) constitutes the base resin of the resin composition of the present invention. The amount of the polyphenylene ether resin (B) is from 1 to 50 wt% based on the weight of the base resin composed of (A) + (B). Within this range, the properties of the polyphenylene ether resin can be properly developed, which in turn give the resin composition good fluidity and impact resistance. The amount of the polyphenylene ether resin (B) is preferably from 20 to 45 wt%, more preferably 25 to 45 wt% based on the weight of the base resin composed of (A) + (B).

(C) Polyphosphonate copolymer

The polyphosphonate copolymer used in the present invention is represented by Formula 1.

[Formula 1]

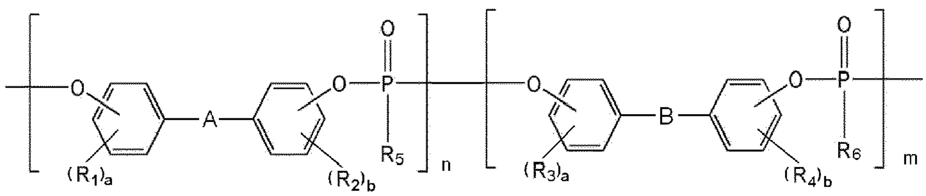

In Formula 1, A and B are each independently a single bond, a $C_1$-$C_5$ alkylene group, a $C_1$-$C_5$ alkylidene group, a $C_5$-$C_6$ cycloalkylidene group, -S- or -$SO_2$-, provided that A and B are not identical to each other; $R_5$ and $R_6$ are each independently a substituted or unsubstituted $C_1$-$C_6$ alkyl group, a substituted or unsubstituted $C_6$-$C_{20}$ aryl group, or a substituted or unsubstituted $C_6$-$C_{20}$ aryloxy group; $R_1$, $R_2$, $R_3$ and $R_4$ are each independently a substituted or unsubstituted $C_1$-$C_6$ alkyl group, a substituted or unsubstituted $C_3$-$C_6$ cycloalkyl group, a substituted or unsubstituted $C_6$-$C_{12}$ aryl group, or a halogen atom; a and b are each independently an integer from 0 to 4; and n and m are each independently an integer from 1 to 500.

In one embodiment, the sum of n and m is 3 to 600. Within this range, the resin composition exhibits much better flame retardancy.

The polyphosphonate copolymer (C) may be prepared by reacting a diol represented by Formula 2-1, a diol represented by Formula 2-2 and a phosphonic dichloride represented by Formula 3.

[Formula 2-1]

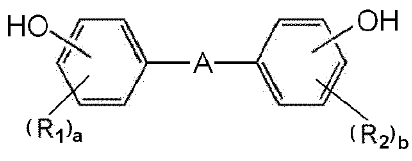

[Formula 2-2]

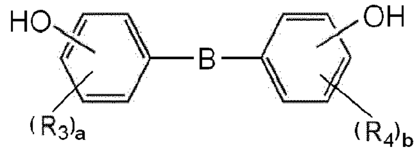

In Formulas 2-1 and 2-2, A, B, $R_1$, $R_2$, $R_3$, $R_4$, a and b are the same as defined in Formula 1.

[Formula 3]

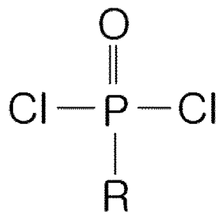

In Formula 3, R is a substituted or unsubstituted $C_1$-$C_6$ alkyl group, a substituted or unsubstituted $C_6$-$C_{20}$ aryl group, or a substituted or unsubstituted $C_6$-$C_{20}$ aryloxy group.

As the phosphonic dichloride represented by Formula 3, two types of compounds wherein R is not identical may be used. R in Formula 3 corresponds to $R_5$ and $R_6$ in Formula 1.

Examples of the diols include 4,4'-dihydroxybiphenyl, 2,2-bis-(4-hydroxyphenyl)-propane, 2,4-bis-(4-hydroxyphenyl)-2-methylbutane, 1,1-bis-(4-hydroxyphenyl)-cyclohexane, 2,2-bis-(3-chloro-4-hydroxyphenyl)-propane, 2,2-bis-(3,5-dichloro-4-hydroxyphenyl)-propane, and the like. These diols may be used in combination thereof. Among these, 4,4'-dihydroxybiphenyl and 2,2-bis-(4-hydroxyphenyl)-propane are preferably used. The ratio between two types of diols may be properly adjusted in accordance with desired physical properties. In one embodiment, the molar ratio between 4,4'-dihydroxybiphenyl and 2,2-bis-(4-hydroxyphenyl)-propane may be 5 to 95: 95 to 5. Within this range, the resin composition of the present invention can exhibit much better flame retardancy.

In one embodiment, the polyphosphonate copolymer may be prepared by adding the phosphonic dichloride to a solution obtained by mixing two types of diols, a catalyst and a terminal capping agent.

In one embodiment, the phosphonic dichloride and the total of the diols may be reacted in an equivalent ratio of 1:1.

The reaction between the diols and phosphonic dichloride may be carried out by a conventional polymerization in the presence of a Lewis acid catalyst. The polymerization is preferably carried out by solution polymerization.

In one embodiment, examples of the Lewis acid catalyst include aluminum chloride, and magnesium chloride, without being limited thereto. The catalyst may be added in an equivalent of 0.01 to 10, preferably 0.01 to 1, more preferably 0.01 to 0.1, based on 1 equivalent of the sum of the diols.

Further, the reaction may be carried out in the presence of a terminal capping agent. As the terminal capping agent, $C_1$-$C_5$ alkyl group containing phenol is preferably used. For example, phenol, 4-t-butylphenol, or 2-t-butylphenol may be used. The terminal capping agent may be added in an equivalent of 1 or less, preferably 0.01 to 0.5, based on 1 equivalent of the sum of the diols.

In one embodiment, after completing the reaction, the resultant may be washed with an acid solution. Examples of the acid solution include phosphoric acid, hydrochloric acid, nitric acid, sulfuric acid, and the like. Preferably, phosphoric acid or hydrochloric acid is used. The acid solution may be used in a concentration of 0.1% to 10%, preferably 1% to 5%.

Then, the polyphosphonate copolymer in a white solid form may be obtained via washing and filtration. The polyphosphonate copolymer prepared as above is linear and does not contain a bisphenol structure.

The polyphosphonate copolymer (C) may have a weight average molecular weight of 1,000 g/mol to 50,000 g/mol, preferably 1,000 g/mol to 20,000 g/mol, more preferably 1,000 g/mol to 10,000 g/mol, as measured by GPC (Gel Permeation Chromatography). Within this range, the resin composition can exhibit much better flame retardancy.

The polyphosphonate copolymer may have an acid value from 0.005 KOH mg/g to 6 KOH mg/g, preferably from 0.01 KOH mg/g to 3 KOH mg/g. Within this range, the resin composition can prevent degradation of the thermoplastic resin.

The polyphosphonate copolymer may have a polydispersity index (PDI) from 1.5 to 3.5, preferably from 1.8 to 3.5. Within this range, the resin composition can exhibit a good balance of physical properties of flame retardancy,

fluidity, impact strength, heat resistance, and the like.

The polyphosphonate copolymer may have a glass transition temperature from 75°C to 90°C, preferably from 78°C to 87°C. Within this range, the resin composition can exhibit good processability.

The polyphosphonate copolymer (C) may have a rate of change in acid value of 0.005 to 6, preferably 0.01 to 5, as calculated by Equation 1.

[Equation 1]

$$\triangle AV = \frac{AVa - AVb}{AVb} \times 100$$

In Equation 1, ΔAV represents the rate of change in acid value, AVa represents the acid value measured after 10 g of the copolymer is left at 280°C for 1 hour, and AVb represents the initial acid value of the copolymer.

The polyphosphonate copolymer (C) may have biphenyl units in an amount of 0.5 mol% to 99.5 mol%, preferably 1 mol% to 50 mol%, based on the total copolymer. Within this range, the resin composition can exhibit much better flame retardancy.

The polyphosphonate copolymer (C) may be present in an amount of 0.1 to 30 parts by weight, preferably 1 to 25 parts by weight, based on 100 parts by weight of the base resin composed of (A) and (B). Within this range, the resin composition can exhibit a good balance of physical properties of flame retardancy, fluidity, impact strength, heat resistance, and the like.

As needed, the thermoplastic resin composition may additionally include additives, such as auxiliary flame retardants, glidants, plasticizers, heat stabilizers, anti-dripping agents, antioxidants, compatibilizers, light stabilizers, pigments, dyes, mineral additives, and the like. These additives may be used alone or in combination thereof.

The thermoplastic resin composition of the present invention may be formed into pellets by mixing the constituent components and other additives simultaneously and then melt extruding the resultant mixture in an extruder. The pellets may be molded by various molding processes such as injection molding, extrusion molding, vacuum molding, casting molding, and the like to produce molded articles.

Another aspect of the invention provides molded articles made from the thermoplastic resin composition according to the present invention. Since these molded articles have excellent properties in terms of impact resistance, fluidity, flame retardancy and the like, the molded articles may be broadly used as components for electric-electronic products, exterior materials, automotive parts, miscellaneous goods, construction materials, and the like.

Next, the constitution and functions of the present invention will be explained in more detail with reference to the following examples. It should be understood that these examples are provided for illustrative purposes only and are not to be in any way construed as limiting the present invention. A description of details apparent to those skilled in the art will be omitted herein.

**Examples**

Specifications of the components used in examples and comparative examples were as follows:

(A) Aromatic vinyl resin: HIPS resin (HG-1730, manufactured by CHEIL Industries) was used.
(B) Polyphenylene ether (PPE) resin: Poly(2,6-dimethyl-phenylether (S-202, manufactured by Asahi Kasei Company, Japan) was used.
(C) Flame retardant

(C-1) Polyphosphonate copolymer

7.18 kg (38.54 mol) of biphenol (Songwon Industrial Co., Ltd.), 8.80 kg (38.54 mol) of 2,2-bis-(4-hydroxyphenyl)-propane (Kumho Industries Co., Ltd.), 5.79 kg (38.54 mol) of 4-t-butylphenol (TCI Co., Ltd.) as a terminal capping agent, and 0.51 kg (3.82 mol) of aluminum chloride were added to 100 kg of chlorobenzene (Samchun Chemical Co. Ltd.) and then dissolved at 145°C. To the resultant solution, 15.45 kg (77.08 mol) of phenyl phosphonic dichloride (IDB Co., Ltd.) was slowly added dropwise and then stirred for 8 hours. The mixture was washed with an aqueous hydrochloric acid solution and distilledwater and the washing procedure was repeated twice to obtain an organic layer. After dehydrogenation of the organic layer, the resultant was precipitated in hexane (Samchun Chemical Co. Ltd.) to obtain a polyphosphonate copolymer in a white solid form. The NMR (Briker AVANCE III & Ultrashield Magnet Company, 300 MHz) data for the prepared copolymer are shown in Figure 1. The number average molecular weight and the weight

average molecular weight of the prepared polyphosphonate copolymer were 2,100 g/mol and 4,400 g/mol, respectively. In addition, the prepared polyphosphonate copolymer had a PDI (polydispersity index) of 2.1, a glass transition temperature of 82°C, and an acid value of 0.01 KOH mg/g. The rate of change in acid value calculated from Equation 1 was 0.64.

(C-2) Bisphenol group containing polyphosphonate

1 equivalent of bisphenol A (Songwon Industrial Co., Ltd.), 0.2 equivalent of 4-t-butylphenol as a terminal capping agent and 0.01 equivalent of aluminum chloride were added to chlorobenzene where chlorobenzene was used at 6 times greater than the amount of bisphenol. After warming to 131°C, 1 equivalent of phenylphosphonic dichloride (Acros Co., Ltd.) was added dropwise, thereby initiating the reaction. After completion of dropping, the resultant mixture was stirred for 2 hours and completed the reaction. After completion of the reaction, the temperature was decreased to 80°C, and the resultant was washed with a 10% aqueous hydrochloric acid solution and then with water twice. After washing, the aqueous layer was removed and the organic layer was removed by reduced pressure distillation to produce a bisphenol group containing polyphosphonate (C-2). The prepared polymer (C-2) had a weight average molecular weight of 3,400 g/mol, PDI of 1.9 and an acid value of 0.01 KOH mg/g. The rate of change in acid value calculated from Equation 1 was 0.69.

(C-3) Phosphoric ester flame retardant: CR-741S (Daihachi, Japan) was used.

(C-4) Phosphoric ester flame retardant: PX-200 (Daihachi, Japan) was used.

**Examples 1-2 and Comparative Examples 1-6**

Each component defined as above was added in an amount shown in Table 1 to a conventional twin-screw extruder and then extruded at a temperature range from 200°C to 280°C to obtain pellets. The pellets were dried at 70°C for 2 hours and molded by a 10 oz injection molding machine at a molding temperature of 180°C to 280°C and a mold temperature of 40°C to 80°C to produce specimens. The prepared specimens were evaluated as to physical properties in accordance with the following methods. The results are provided in Table 1.

<u>Evaluation of physical properties</u>

(1) Flame retardancy: Flame retardancy was measured on a 1/8" thick specimen in accordance with UL94 VB flame retardant standards.
(2) Heat resistance (VST): Heat resistance was measured under conditions of 5 kg, 50°C/HR in accordance with ISO R 306.
(3) Heat deformation temperature: Heat deformation temperature was measured by applying a surface pressure of 1.82 MPa in accordance with ASTM D648 (°C).
(4) Izod impact strength: Izod impact strength was measured on a 1/8" thick notched specimen at room temperature in accordance with ASTM D-256 (kgf·cm/cm).
(5) Melt flow index: The melt flow index was measured under conditions of 250°C, 10 kg (g/10 min).

**TABLE 1**

| | | Examples | | Comparative Examples | | | | | |
|---|---|---|---|---|---|---|---|---|---|
| | | 1 | 2 | 1 | 2 | 3 | 4 | 5 | 6 |
| HIPS | | 55 | 55 | 55 | 55 | 55 | 55 | 55 | 55 |
| PPE | | 45 | 45 | 45 | 45 | 45 | 45 | 45 | 45 |
| Flame Retardant | (C-1) | 15 | 20 | - | - | - | - | - | - |
| | (C-2) | - | - | 15 | 20 | - | - | - | - |
| | (C-3) | - | - | - | - | 15 | 20 | - | - |
| | (C-4) | - | - | - | - | - | - | 15 | 20 |
| Flame retardancy | | V-1 | V-1 | V-1 | V-1 | V-1 | Fail | V-1 | V-1 |
| Vicat softening point (°C) | | 129.0 | 126.1 | 124.9 | 125.2 | 103.1 | 103.5 | 106 | 97.5 |

(continued)

| | Examples | | Comparative Examples | | | | | |
|---|---|---|---|---|---|---|---|---|
| | 1 | 2 | 1 | 2 | 3 | 4 | 5 | 6 |
| Heat deformation temperature (°C) | 111.9 | 111.3 | 112.9 | 111.0 | 89.5 | 89 | 91 | 83.2 |
| IZOD impact strength | 7.9 | 6.6 | 6.2 | 3.9 | 8.1 | 6.9 | 8.3 | 6.8 |
| Melt flow index | 43 | 102 | 58 | 109 | 85 | 72 | 45 | 70 |

As shown in Table 1, it could be seen that Comparative Examples 3-6 using monomolecular flame retardants demonstrated deteriorated heat resistance, as compared to Comparative Examples 1 and 2 using polyphosphonates. Further, Examples 1 and 2 using the polyphosphonate copolymers of the present invention demonstrated excellent impact strength and heat resistance, as compared to Comparative Examples 1 and 2.

Although some embodiments have been disclosed herein, it should be understood that these embodiments are provided by way of illustration only, and that various modification, changes, and alterations can be made without departing from the spirit and scope of the invention. Therefore, the scope of the present invention should be limited only by the accompanying claims and equivalents thereof.

## Claims

1. A flame retardant thermoplastic resin composition comprising: 100 parts by weight of a base resin composed of an aromatic vinyl resin and a polyphenylene oxide resin; and 0.1 to 30 parts by weight of a polyphosphonate copolymer represented by Formula 1:

[Formula 1]

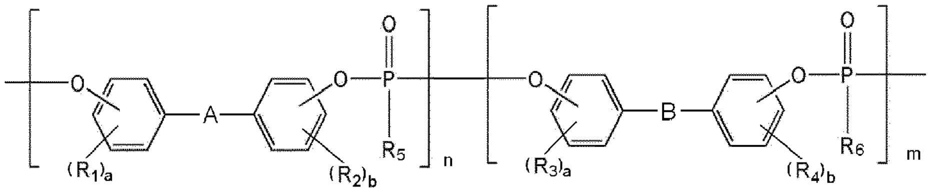

,

(wherein A and B are each independently a single bond, a $C_1$-$C_5$ alkylene group, a $C_1$-$C_5$ alkylidene group, a $C_5$-$C_6$ cycloalkylidene group, -S- or -$SO_2$-, provided that A and B are not identical to each other;
$R_5$ and $R_6$ are each independently a substituted or unsubstituted $C_1$-$C_6$ alkyl group, a substituted or unsubstituted $C_6$-$C_{20}$ aryl group, or a substituted or unsubstituted $C_6$-$C_{20}$ aryloxy group;
$R_1$, $R_2$, $R_3$ and $R_4$ are each independently a substituted or unsubstituted $C_1$-$C_6$ alkyl group, a substituted or unsubstituted $C_3$-$C_6$ cycloalkyl group, a substituted or unsubstituted $C_6$-$C_{12}$ aryl group, or a halogen atom;
a and b are each independently an integer from 0 to 4; and
n and m are each independently an integer from 1 to 500.)

2. The flame retardant thermoplastic composition according to claim 1, wherein the base resin comprises 50 wt% to 99 wt% of an aromatic vinyl resin and 1 wt% to 50 wt% of a polyphenylene oxide resin.

3. The flame retardant thermoplastic composition according to claim 1 or 2, wherein the aromatic vinyl resin is composed of 1 wt% to 30 wt% of a rubber polymer and 70 wt% to 99 wt% of an aromatic vinyl monomer.

4. The flame retardant thermoplastic composition according to any of claims 1 to 3, wherein the sum of n and m ranges from 3 to 600.

5. The flame retardant thermoplastic composition according to any of claims 1 to 4, wherein the polyphosphonate copolymer has a weight average molecular weight of 1,000 g/mol to 50,000 g/mol.

6. The flame retardant thermoplastic composition according to any of claims 1 to 5, wherein the polyphosphonate copolymer has a glass transition temperature of 75°C to 90°C.

7. The flame retardant thermoplastic composition according to any of claims 1 to 6, wherein the polyphosphonate copolymer has a rate of change in acid value of 0.005 to 6, as calculated by Equation 1:

[Equation 1]

$$\Delta AV = \frac{AVa - AVb}{AVb} \times 100,$$

(wherein $\Delta AV$ represents the rate of change in acid value, AVa represents the acid value measured after 10 g of the copolymer is left at 280°C for 1 hour, and AVb represents the initial acid value of the copolymer).

8. The flame retardant thermoplastic composition according to any of claims 1 to 7, wherein the polyphosphonate copolymer has biphenyl units in an amount of 0.5 mol% to 99.5 mol%, based on the total copolymer.

9. The flame retardant thermoplastic composition according to any of claims 1 to 8, wherein the thermoplastic resin composition further comprises at least one of auxiliary flame retardants, glidants, plasticizers, heat stabilizers, anti-dripping agents, antioxidants, compatibilizers, light stabilizers, pigments, dyes, and mineral additives.

10. A molded article obtainable from the flame retardant thermoplastic composition according to any one of claims 1 to 9.

Fig 1.

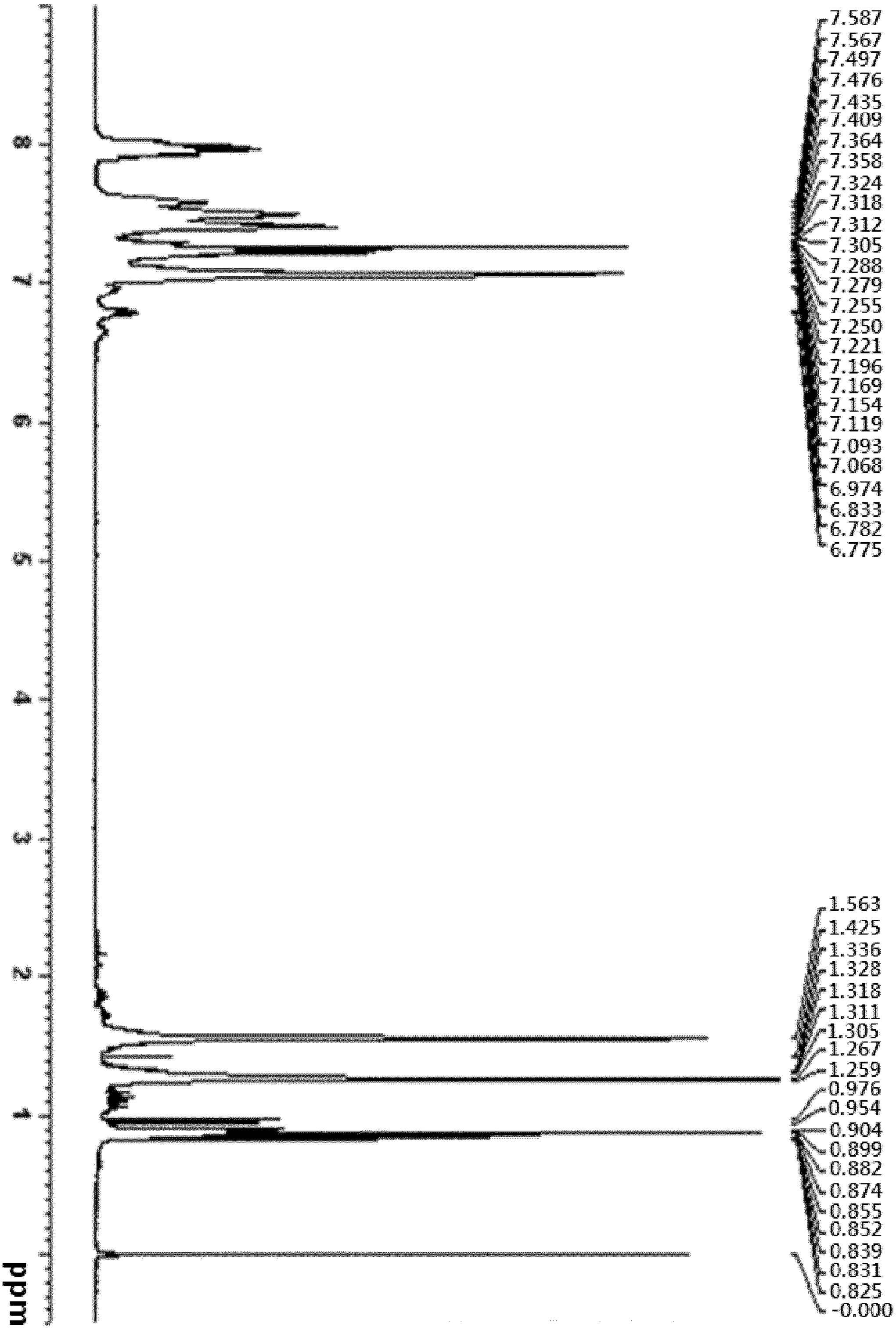
7.587
7.567
7.497
7.476
7.435
7.409
7.364
7.358
7.324
7.318
7.312
7.305
7.288
7.279
7.255
7.250
7.221
7.196
7.169
7.154
7.119
7.093
7.068
6.974
6.833
6.782
6.775
1.563
1.425
1.336
1.328
1.318
1.311
1.305
1.267
1.259
0.976
0.954
0.904
0.899
0.882
0.874
0.855
0.852
0.839
0.831
0.825
-0.000
8
7
6
5
4
3
2
1
ppm

Europäisches Patentamt
European Patent Office
Office européen des brevets

# EUROPEAN SEARCH REPORT

Application Number
EP 12 19 7187

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SCHMIDT M ET AL: "AROMATISCHE POLYPHOSPHONATE: THERMOPLASTISCHE POLYMERE VON EXTREMER BRANDWIDRIGKEIT//AROMATIC POLYPHOSPHONATES: EXCEPTIONALLY FLAME-RESISTANT THERMOPLASTIC POLYMERS", ANGEWANDTE MAKROMOLEKULARE CHEMIE. APPLIED MACROMOLECULARCHEMISTRY AND PHYSICS, WILEY VCH, WEINHEIM, DE, vol. 132, no. 2165, 1 January 1985 (1985-01-01), pages 1-18, XP009044253, ISSN: 0003-3146, DOI: 10.1002/APMC.1985.051320101 * table 3 * ----- | 1-10 | INV. C08L51/04 C08L71/12 C08L85/02 ADD. C08G79/04 |
| Y | EP 0 767 204 A2 (GEN ELECTRIC [US]) 9 April 1997 (1997-04-09) * claims; examples * ----- | 1-10 | |
| Y | US 5 290 836 A (TRUYEN JAN H [NL]) 1 March 1994 (1994-03-01) * claim 10; examples * ----- | 1-10 | TECHNICAL FIELDS SEARCHED (IPC) |
| A | US 2011/218260 A1 (MACK ARTHUR G [US] ET AL) 8 September 2011 (2011-09-08) * claim 1 * ----- | 1-10 | C08G C08L |

The present search report has been drawn up for all claims

1

| Place of search | Date of completion of the search | Examiner |
|---|---|---|
| Munich | 19 February 2013 | Friebe, Lars |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 12 19 7187

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2013

| Patent document cited in search report | Publication date | Patent family member(s) | Publication date |
|---|---|---|---|
| EP 0767204 A2 | 09-04-1997 | DE 69628621 D1 | 17-07-2003 |
| | | DE 69628621 T2 | 01-04-2004 |
| | | EP 0767204 A2 | 09-04-1997 |
| | | ES 2201155 T3 | 16-03-2004 |
| | | JP 9095610 A | 08-04-1997 |
| US 5290836 A | 01-03-1994 | DE 69210536 D1 | 13-06-1996 |
| | | DE 69210536 T2 | 23-01-1997 |
| | | EP 0538950 A1 | 28-04-1993 |
| | | ES 2089374 T3 | 01-10-1996 |
| | | JP 5302013 A | 16-11-1993 |
| | | US 5290836 A | 01-03-1994 |
| US 2011218260 A1 | 08-09-2011 | CA 2743356 A1 | 29-04-2010 |
| | | CN 102171229 A | 31-08-2011 |
| | | EP 2384331 A1 | 09-11-2011 |
| | | JP 2012506456 A | 15-03-2012 |
| | | KR 20110074546 A | 30-06-2011 |
| | | TW 201022335 A | 16-06-2010 |
| | | US 2011218260 A1 | 08-09-2011 |
| | | WO 2010048121 A1 | 29-04-2010 |

EPO FORM P0459

For more details about this annex : see Official Journal of the European Patent Office, No. 12/82